# FASCICULE DE BREVET EUROPEEN

(11) **EP 0 367 655 B1**
(45) Date de publication et mention de la délivrance du brevet: **28.07.1993**
(21) Numéro de dépôt: 89402915.6
(22) Date de dépôt: 23.10.1989
(51) Int. Cl.: F16K 13/00

(54) **Dispositif de commande de moyens de libération d'un fluide sous pression contenu dans un récipient**
Betätigungsvorrichtung für den Abfluss eines unter Druck stehenden Mediums aus einem Behälter
Operating device for the evacuation of a pressurised fluid container in a recipient

(30) Priorité: 27.10.1988 FR 8814054
(43) Date de publication de la demande: 09.05.1990
(73) Titulaire: PLASTIMO, 56104 Lorient Cédex (FR)
(72) Inventeur: Audren, Christian Joseph, F-56200 Larmor Plage (FR); Geneau, Bernard Jean Paul, F-56830 Gestel (FR)
(74) Mandataire: Polus, Camille

(56) Documents cités:
- GB-A- 770 276
- LU-A- 28 628

## Description

La présente invention concerne un dispositif de commande de moyens de libération d'un fluide sous pression contenu dans un récipient.

On connaît déjà dans l'état de la technique des dispositifs de ce type comportant un corps muni d'au moins un évidement dans lequel est montée déplaçable, sous l'action de moyens de déclenchement, une tête d'actionnement des moyens de libération. Différents modes de réalisation ont été proposés. Ainsi par exemple les moyens de déclenchement peuvent être constitués par des systèmes vis-écrou, des ressorts précontraints ou encore des systèmes pyrotechniques. Les moyens de libération peuvent, quant à eux, être constitués par une tête de percussion perforant une membrane d'obturation du récipient ou encore un poussoir actionnant une vanne d'échappement du fluide sous pression contenu dans ce récipient.

Dans les dispositifs d'ouverture de récipient de fluide sous pression fonctionnant avec un percuteur ou un poussoir, actionné par exemple par un système vis-écrou commandé manuellement, la course du percuteur ou du poussoir est liée à la course de traction exercée par l'utilisateur sur ce système.

On conçoit alors que l'on est obligé de dimensionner ces moyens de déclenchement de manière que la course du percuteur ou du poussoir soit suffisante pour obtenir un bon échappement du fluide sous pression.

Ces contraintes engendrent un certain nombre de problèmes liés notamment à l'encombrement de ces dispositifs, à leur facilité de déclenchement et à leur fiabilité, dans le temps. Or, dans certaines applications, comme par exemple le gonflage de radeaux de survie en mer, ces caractéristiques sont d'une importance capitale.

On connaît également dans l'état de la technique par le document LU-A-28 628, comme défini dans le préambule de la revendication 1, un dispositif de commande de moyens de libération d'un fluide sous pression contenu dans un récipient.

Ce dispositif comporte un corps muni d'au moins un évidement dans lequel est montée déplaçable sous l'action de moyens de déclenchement, une tête d'actionnement des moyens de libération.

Ce dispositif comporte également des moyens d'assistance à l'actionnement des moyens de libération dont la source d'énergie est le fluide sous pression.

Les moyens de libération de fluide sous pression et la tête d'actionnement sont montés déplaçables dans le corps entré une position escamotée et une position active de libération de fluide et le corps comporte un conduit de sortie de fluide sous pression.

Dans ce dispositif, le récipient sous pression présente une ouverture débouchant dans une canalisation intérieure du corps, cette canalisation étant obstruée de façon étanche par un opercule principal.

Il est également prévu, dans le corps, un conduit dont une extrémité débouche dans cette canalisation et dont l'autre extrémité est obstruée par un opercule auxiliaire.

Cet opercule auxiliaire peut être perforé par un trépan auxiliaire dont le déplacement est commandé par un utilisateur à l'aide de moyens de déclenchement. Une fois cet opercule auxiliaire perforé, du fluide sous pression est acheminé vers la tête d'actionnement des moyens de libération de fluide sous pression pour provoquer leur déplacement entre une position escamotée et une position active dans laquelle ces moyens de perforation déchirent l'opercule principal afin de provoquer la libération du fluide sous pression en direction du conduit de sortie du corps.

Le but de l'invention est donc de proposer un dispositif de commande qui soit simple, fiable présentant un encombrement réduit, d'un prix de revient peu élevé et qui permette de commander l'échappement du fluide sous pression de manière rapide et efficace.

A cet effet, l'invention a pour objet un dispositif de commande de moyens de libération d'un fluide sous pression contenu dans un récipient comme défini dans la revendication 1.

L'invention sera mieux comprise à l'aide de la description qui va suivre donnée uniquement à titre d exemple et faite en se référant aux dessins annexés sur lesquels :
- les Fig.1 à 3 représentent des vues en coupe d'un premier mode de réalisation d'un dispositif selon l'invention illustrant le fonctionnement de celui-ci, et
- la Fig.4 représente une vue en coupe d'un second mode de réalisation d'un dispositif selon l'invention.

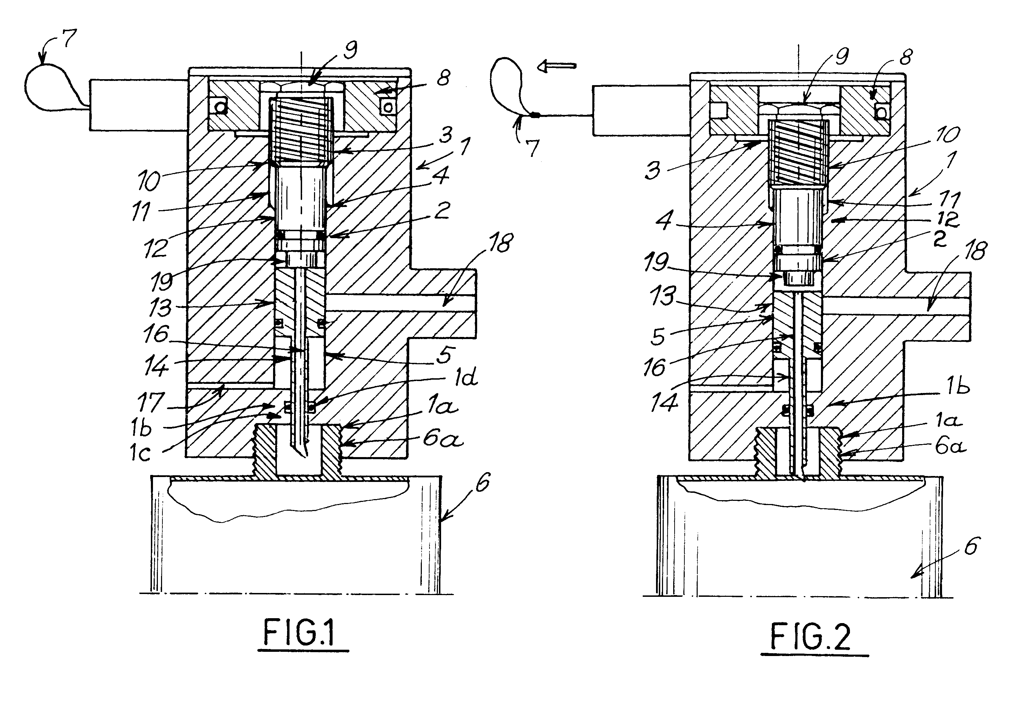

Ainsi qu'on peut le voir sur la Fig.1, un dispositif de commande selon l'invention comporte un corps 1 muni d'au moins un évidement axial 2 dans lequel sont montés déplaçables sous l'action de moyens de déclenchement 3, des moyens d'actionnement 4 de moyens de libération 5 d'un fluide sous pression contenu dans un récipient 6. Ce récipient comporte par exemple une collerette en saillie 6a vissée dans une chambre d'échappement 1a du corps 1. La chambre d'échappement 1a et l'évidement axial 2 du corps 1 sont séparés par une cloison 1b munie d'un trou 1c pour le passage d'une partie des moyens de libération du fluide contenu dans le récipient, constitués par exemple par des moyens de perforation du récipient qui seront décrits plus en détail par la suite. Un joint d'étanchéité 1d est prévu entre cette cloison et ces moyens de perforation pour assurer une séparation étanche entre la chambre d échappement 1a et l'évidement axial 2 du corps. Les moyens de déclenchement comprennent, dans cet exemple de réalisation, un câble de commande 7 actionnant, par l'intermédiaire d'un organe d'entraînement 8, une tête 9 d'une vis 10 coopérant avec une portion taraudée 11 du corps pour se déplacer dans l'évidement de celui-ci et donc par rapport à l'organe d'entraînement.

Le dispositif selon l'invention comporte une tête d'actionnement 12, constituant les moyens d'actionnement 4 décrits précédemment, montée déplaçable dans l'évidement 2 sous l'action des moyens de déclenchement 3 décrits précédemment, cette tête d'actionnement entraînant lors de son déplacement les moyens de libération 5 du fluide sous pression contenu dans le récipient. Ces moyens de libération comprennent, dans ce mode de réalisation, un piston 13 dont une face est adaptée pour coopérer avec la tête d'actionnement 12 et dont l'autre face comporte des moyens 14 adaptés pour perforer le récipient et permettre ainsi l'échappement de fluide sous pression de ce récipient dans la chambre d'échappement 1a du corps. Ces moyens de perforation sont par exemple constitués par un tube dont l'extrémité est biseautée. En effet, le piston 13 décrit précédemment et ce tube comportent un conduit axial 16 constituant des moyens de raccordement de moyens d'assistance à l'actionnement des moyens de libération, au trajet de sortie du fluide sous pression, de manière que ces moyens d'assistance soient alimentés après un début d'actionnement des moyens de libération par la tête de commande, comme cela sera décrit plus en détail par la suite.

Le corps 1 comporte également un conduit de mise à l'air 17 de la portion d'évidement comprise entre les moyens de libération, et plus particulièrement le piston de ceux-ci, et le reste du corps et un conduit de sortie de fluide sous pression 18, ce conduit étant ménagé dans une partie du corps 1, de manière qu'il soit obturé par le piston 13 des moyens de libération lorsque ceux-ci sont en position escamotée dans l'évidement 2 du corps.

Dans le mode de réalisation représenté sur cette figure, les moyens d'assistance comprennent une chambre d'assistance prévue dans cet évidement du corps. Cette chambre d'assistance est par exemple constituée par une chambre 19 ménagée entre la tête d'actionnement 12 et les moyens de libération 5, et plus particulièrement le piston 13 de ceux-ci. Cette chambre est reliée à la chambre d'échappement 1a du corps par l'intermédiaire du conduit 16 des moyens de libération pour entraîner un déplacement de ces moyens de libération, comme cela sera décrit plus en détail par la suite.

Sur cette Fig.1, on a représenté un dispositif en position non déclenchée. En effet, la vis 10 et la tête d'actionnement 12 sont en position haute, de même que les moyens de libération, de sorte que l'extrémité de perforation de ceux-ci est escamotée dans la chambre d'échappement 1a.

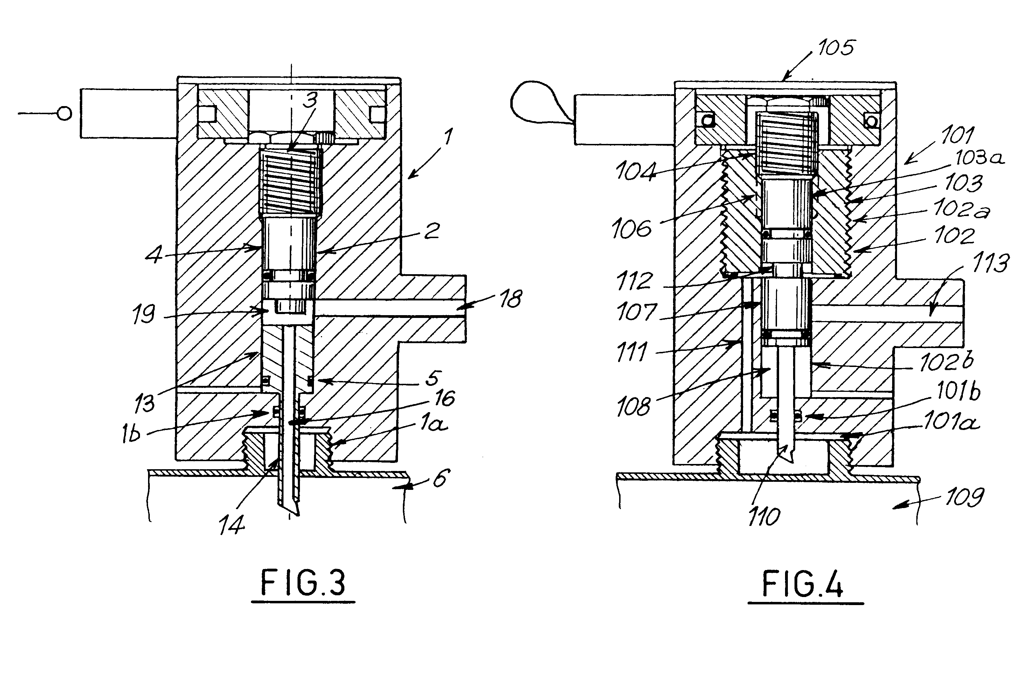

Lorsque l'utilisateur désire commander l'échappement de fluide, il actionne le câble de commande 7, comme indiqué par la flèche sur la Fig.2, de manière à entraîner en rotation la vis 10 par l'intermédiaire de l'organe 8 et de la tête 9 de cette vis. Cette vis coopérant avec le taraudage interne 11 du corps, descend dans l'évidement 2 de celui-ci et la tête d'actionnement 12 solidaire de cette vis pousse les moyens de libération de fluide, constitués dans ce cas par des moyens de perforation du récipient, vers une position active. Dès que l'extrémité de ces moyens de perforation a perforé ce récipient, du fluide sous pression s'introduit dans le conduit axial 16 de ces moyens de libération depuis le récipient 6 vers la chambre d'assistance 19. L'augmentation de pression dans cette chambre entraîne une poursuite du déplacement du piston 13 des moyens de libération 5 jusqu'à une position dans laquelle ces moyens de libération, et plus particulièrement le piston 13 de ceux-ci, dégagent le conduit de sortie de fluide sous pression 18 et perforent complètement le récipient. Ce conduit est alors, comme on peut le voir plus particulièrement sur la Fig.3, en communication avec la chambre d'assistance 19 qui est elle-même en communication avec l'intérieur du récipient de fluide sous pression 6 par l'intermédiaire du conduit 16 ménagé dans les moyens de libération. Il est à noter que dans ce mode de réalisation, le système vis-taraudage est non-réversible.

On conçoit donc que la chambre 19 constitue des moyens d'assistance au déplacement des moyens de libération de fluide sous pression, cette chambre étant reliée au trajet de sortie de fluide sous pression après un début d'actionnement des moyens de libération par la tête d'actionnement.

Il est à noter que, dans le cas où le dispositif selon l'invention est utilisé pour assurer la commande du gonflage d'une structure quelconque, telle qu'un radeau de survie, celle-ci est raccordée au conduit de sortie 18.

Bien entendu, d'autres modes de réalisation sont possibles. Ainsi par exemple, sur la Fig.4, on a représenté un second mode de réalisation d'un dispositif selon l'invention qui comporte toujours un corps 101 muni d'un évidement étagé 102 dans une première partie 102a duquel est disposé un manchon 103 taraudé et fileté, adapté pour coopérer avec une vis 104 de moyens de déclenchement 105 du dispositif. Cette vis 104 est reliée à une tête d'actionnement 106 déplaçable dans un évidement 103a du manchon et dont une extrémité est adaptée pour coopérer avec un piston 107 de moyens de libération 108 de fluide sous pression contenu dans un récipient 109 fixé sur ce corps. Ce piston est monté déplaçable dans une seconde partie 102b de l'évidement du corps entre une position escamotée et une position active dans laquelle une tête de percussion 110 reliée au piston 107 perfore le récipient 109. Le corps 101 comporte également une chambre d'échappement 101a mise en communication avec l'intérieur du récipient 109 lorsque la tête de percussion a commencé à perforer ce récipient 109. Le fluide sous pression passe donc dans la chambre d'échappement 101a séparée de l'évidement 102 de manière étanche par une cloison 101b analogue à la cloison 1b décrite en regard de la Fig. 1 , puis, par l'intermédiaire d'un conduit 111 ménagé dans le corps du boîtier, dans une chambre d'assistance 112 prévue entre les moyens de libération et la tête d'actionnement. Sous l'effet de cette pression, le piston 107 poursuit sa descente jusqu'à une position dans laquelle la chambre d'assistance 112 est mise en communication avec un conduit 113 de sortie de fluide.

Dans ce mode de réalisation, les moyens de raccordement de la chambre d'assistance 112 au trajet de sortie du fluide comprennent un conduit ménagé dans le corps du boîtier entre la chambre d'échappement et la chambre d'assistance.

D'autre modes de réalisation sont également possibles. Ainsi, les moyens d'assistance peuvent comprendre une chambre d'assistance prévue entre une extrémité de la tête d'actionnement, par exemple au niveau de la tête de vis 9, et la surface en regard du corps 1. Dans ce cas, le système de déclenchement à vis-écrou est réversible, de manière à permettre le déplacement de l'ensemble monté dans l'évidement du corps.

Par ailleurs, les moyens d'assistance peuvent également comprendre une chambre d'assistance prévue dans une partie intermédiaire de la tête d'actionnement entre deux surfaces de celle-ci en regard et de sections efficaces différentes.

La tête d'actionnement peut également être constituée de deux parties dont l'une est, par exemple, solidaire de la vis des moyens de déclenchement, et déplaçables l'une par rapport à l'autre et les moyens d'assistance peuvent comprendre une chambre d'assistance ménagée alors entre les moyens de déclenchement et la tête d'actionnement.

Les moyens de raccordement, suivant les différents cas décrits précédemment, peuvent être constitués par un conduit ménagé dans le corps du boîtier ou dans toutes les pièces disposées dans l'évidement de ce corps entre la chambre d'échappement et la chambre d'assistance, dans le cas où la chambre d'assistance est prévue entre la tête de la vis et la surface en regard du corps, ou par un conduit ménagé dans les moyens de perforation du récipient et dans la tête d'actionnement, dans le cas où la chambre est ménagée entre cette tête d'actionnement et les moyens de déclenchement.

Selon d'autres modes de réalisation, les moyens de libération de fluide sous pression peuvent également comporter une vanne d'échappement de fluide.

Dans ce cas, les moyens d'assistance sont reliés à la sortie de cette vanne par les moyens de raccordement. Ces moyens de raccordement peuvent être constitués par exemple par un conduit connecté en dérivation sur l'orifice de sortie de cette vanne. La tête d'actionnement des moyens de libération agit alors sur une tige de commande de cette vanne, déplaçable par cette tête d'actionnement en réponse à une sollicitation des moyens de déclenchement, ce déplacement étant toujours assisté de manière analogue à celle décrite précédemment.

## Revendications

1. Dispositif de commande de moyens de libération d'un fluide sous pression contenu dans un récipient (6;109), du type comportant un corps (1;101) muni d'au moins un évidement (2;102) dans lequel est montée déplaçable, sous l'action de moyens de déclenchement (3;105), une tête d'actionnement (12;105) des moyens de libération (5;108) comprenant des moyens de perforation, ce dispositif comportant des moyens d'assistance (19;112), à l'actionnement des moyens de libération (5;108), dont la source d'énergie est le fluide sous pression, ces moyens (5;108) de libération de fluide sous pression et/ou la tête d'actionnement (10;106) étant montés déplaçables dans le corps, entre une position escamotée et une position active de libération de fluide, ce corps comportant un conduit (18;113) de sortie du fluide sous pression, caractérisé en ce que les moyens de perforation sont adaptés pour perforer le récipient après un début d'actionnement par la tête d'actionnement, en ce qu'il est prévu des moyens d'alimentation (16;111) des moyens d'assistance (19;112) après un début de perforation du récipient par les moyens de perforation, et en ce que le conduit (18;113) de sortie de fluide sous pression est ménagé dans une portion du corps (1;101) en communication avec les moyens d'assistance (19;112) lorsque les moyens de libération de fluide sous pression et/ou la tête d'actionnement sont en position active.

2. Dispositif selon la revendication 1, caractérisé en ce qu'il comporte des moyens de raccordement (16 ; 111) des moyens d'assistance (19 ; 112), au trajet de sortie du fluide sous pression.

3. Dispositif selon la revendication 1 ou 2, caractérisé en ce que les moyens d' assistance comprennent une chambre ( 19 ; 112) prévue dans l'évidement (2; 102) du corps.

4. Dispositif selon l'une quelconque des revendications précédentes, caractérisé en ce que les moyens d'assistance comprennent une chambre d'assistance entre une extrémité de la tête d'actionnement et la surface en regard du corps.

5. Dispositif selon l'une quelconque des revendications 1 à 3, caractérisé en ce que les moyens d'assistance comprennent une chambre d'assistance prévue dans une partie intermédiaire de la tête d'actionnement entre deux surfaces en regard de celle-ci, de sections efficaces différentes.

6. Dispositif selon l'une quelconque des revendications 1 à 3, caractérisé en ce que les moyens d'assistance comprennent une chambre d'assistance, ménagée entre les moyens de déclenchement et la tête d'actionnement.

7. Dispositif selon l'une quelconque des revendications 1 à 3, caractérisé en ce que les moyens d'assistance comprennent une chambre (19 ; 112) ménagée entre la tête d'actionnement (12 ; 106) et les moyens de libération (5 ; 108).

8. Dispositif selon l'une quelconque des revendications 2 à 7, caractérisé en ce que les moyens de libération de fluide sous pression comprennent une vanne d'échappement de fluide et en ce que les moyens d'assistance sont reliés à la sortie de cette vanne par les moyens de raccordement.

9. Dispositif selon la revendication 7, caractérisé en ce que la tête d'actionnement des moyens de libération comprend une tige de commande de ceux-ci.

10. Dispositif selon l'une quelconque des revendication 1 à 7, caractérisé en ce que une portion (6a) de récipient fixée sur le corps est vissée dans une chambre d'échappement (1a, 101a) en regard des moyens de perforation.

11. Dispositif selon les revendications 2 et 10, caractérisé en ce que les moyens de raccordement des moyens d'assistance au trajet de sortie de fluide sous pression comprennent un conduit (111) ménagé dans le corps du boîtier entre la chambre d'échappement (101a) et la chambre d'assistance (112).

12. Dispositif selon les revendications 2 et 4, caractérisé en ce que les moyens de raccordement des moyens d'assistance au trajet de sortie de fluide sous pression comprennent un conduit ménagé dans les moyens de perforation du récipient, dans la tête d'actionnement et dans les moyens de déclenchement.

13. Dispositif selon les revendications 2 et 6, caractérisé en ce que les moyens de raccordement des moyens d'assistance au trajet de sortie de fluide sous pression comprennent un conduit ménagé dans les moyens de perforation et dans la tête d'actionnement.

14. Dispositif selon les revendications 2 et 7, caractérisé en ce que les moyens de raccordement des moyens d'assistance au trajet de sortie de fluide sous pression comprennent un conduit (16) ménagé dans les moyens de perforation (13 ; 14).

15. Dispositif selon l'une quelconque des revendications 1 à 14, caractérisé en ce que les moyens de perforation comprennent un piston (13 ; 107) déplaçable dans l'évidement du corps et comportant un organe de perforation (14 ; 110) du récipient, sur l'une de ses faces.

16. Dispositif selon la revendication 10, caractérisé en ce que la chambre d'échappement (1a ; 101a) est séparée de l'évidement (2 ; 102) du corps par une cloison (1b ; 101 b) présentant un trou (1c) pour le passage des moyens de perforation, des moyens d'étanchéité (1d) étant prévus entre cette cloison et ces moyens pour assurer une séparation étanche entre la chambre et l'évidement.

## Claims

1. Device for controlling means for releasing a pressurised fluid held in a container (6; 109), of the type including a body (1; 101) provided with at least one cavity (2; 102) in which there is mounted so as to move under the action of initiating means (3; 105) an actuation head (12; 105) for the release means (5; 108) comprising perforation means, this device including means (19; 112) for assisting actuation of the release means (5; 108) whose source of energy is the pressurised fluid, these pressurised fluid release means (5; 108) and/or the actuation head (10; 106) being mounted so as to move in the body between a retracted position and an active fluid release position, this body including a pressurised fluid outlet duct (18; 113), characterised in that the perforation means are adapted to perforate the container after a beginning of actuation by the actuation head, in that there are provided means (16; 111) for feeding the assisting means (19; 112) after a beginning of perforation of the container by the perforation means, and in that the pressurised fluid outlet duct (18; 113) is arranged in a portion of the body (1; 101) in communication with the assisting means (19; 112) when the pressurised fluid release means and/or the actuation head are in the active position.

2. Device according to Claim 1, characterised in that it includes means (16; 111) for connecting the assisting means (19; 112) to the pressurised fluid outlet path.

3. Device according to Claim 1 or 2, characterised in that the assisting means comprise a chamber (19; 112) provided in the cavity (2; 102) of the body.

4. Device according to any one of the preceding claims, characterised in that the assisting means comprise an assisting chamber between one end of the actuation head and the facing surface of the body.

5. Device according to any one of Claims 1 to 3, characterised in that the assisting means comprise an assisting chamber provided in an intermediate part of the actuation head between two facing surfaces of the latter, with different effective cross-sections.

6. Device according to any one of Claims 1 to 3, characterised in that the assisting means comprise an assisting chamber arranged between the initiating means and the actuation head.

7. Device according to any one of Claims 1 to 3, characterised in that the assisting means comprise a chamber (19,112) arranged between the actuation head (12; 106) and the release means (5; 108).

8. Device according to any one of Claims 2 to 7, characterised in that the pressurised fluid release means comprise a fluid discharge valve and in that the assisting means are linked to the outlet of this valve by the connecting means.

9. Device according to Claim 7, characterised in that the actuation head of the release means comprises a rod for control of the latter.

10. Device according to any one of Claims 1 to 7, characterised in that a portion (6a) of container, fixed to the body, is screwed into a discharge chamber (1a, 101a) facing the perforation means.

11. Device according to Claims 2 and 10, characterised in that the means for connecting the assisting means to the pressurised fluid outlet path comprise a duct (111) arranged in the body of the housing between the discharge chamber (101a) and the assisting chamber (112).

12. Device according to Claims 2 and 4, characterized in that the means for connecting the assisting means to the pressurized fluid outlet path comprise a duct arranged in the container perforation means, in the actuation head and in the initiating means.

13. Device according to Claims 2 and 6, characterized in that the means for connecting the assisting means to the pressurized fluid outlet path comprise a duct arranged in the perforation means and in the actuation head.

14. Device according to Claims 2 and 7, characterized in that the means for connecting the assisting means to the pressurized fluid outlet path comprise a duct (16) arranged in the perforation means (13; 14).

15. Device according to any one of Claims 1 to 14, characterized in that the perforation means comprise a piston (13; 107) movable in the cavity of the body and including a container perforation element (14; 110) on one of its faces.

16. Device according to Claim 10, characterized in that the discharge chamber (1a; 101a) is separated from the cavity (2; 102) of the body by a partition (1b; 101b) having a hole (1c) for the passage of the perforation means, sealing means (1d) being provided between this partition and these means in order to afford a sealed separation between the chamber and the cavity.

## Patentansprüche

1. Betätigungsvorrichtung für den Abfluß eines unter Druck stehenden Mediums aus einem Behältar (6; 109) mit einem Körper (1; 101), welcher wenigstens einen Hohlraum (2; 102) aufweist, in dem unter der Wirkung von Auslösungsmitteln (3; 105) verschiebbar ein Betätigungskopf (12; 105) für die die Mittel für das Durchschlagen aufweisenden Abflußmittel (5; 108) montiert ist, wobei diese Vorrichtung Unterstützungsmittel (19; 112) für die Unterstützung der Betätigung der Abflußmittel (5; 108) aufweist, deren Energiequelle das unter Druck stehende Medium ist, wobei diese Mittel (5; 108) für den Abfluß des unter Druck stehenden Mediums und/oder der Betätigungskopf (10; 106) in dem Körper beweglich zwischen einer eingezogenen Position und einer aktiven Position für den Abfluß des Mediums montiert sind, und wobei dieser Körper eine Auslaßleitung (18; 113) für das bedrückte Medium aufweist,
**dadurch gekennzeichnet**, **daß**
die Mittel für den Durchschlag dafür ausgelegt sind, den Behälter nach Beginn der Betätigung durch den Betätigungskopf zu durchschlagen, und dadurch, daß Mittel (16; 111) für die Versorgung der Unterstützungsmittel (19; 112) nach Beginn der Durchschlagung des Behälters durch die Durchschlagsmittel vorgesehen sind, und dadurch, daß die Auslaßleitung (18; 113) für das unter Druck stehende Medium in einem Teil des Körpers (1; 101), untergebracht ist, welcher mit den Hilfsmitteln (19; 112) in Verbindung steht, wenn sich die Mittel für den Abfluß des unter Druck stehenden Mediums und/oder der Betätigungskopf in der aktiven Stellung befinden.

2. Vorrichtung nach Anspruch 1,
**dadurch gekennzeichnet**, **daß**
sie Mittel für den Anschluß (16; 111) der Unterstützungsmittel (19; 112) an den Auslaßpfad des unter Druck stehenden Mediums aufweist.

3. Vorrichtung nach einem der Ansprüche 1 oder 2,
**dadurch gekennzeichnet**, **daß**
die Unterstützungsmittel eine Kammer (19; 112) aufweisen, welche in der Hohlraum (2; 102) des Körpers vorgesehen ist.

4. Vorrichtung nach einem der vorausgegangenen Ansprüche,
**dadurch gekennzeichnet**, **daß**
die Unterstützungsmittel eine Hilfskammer aufweisen, welche zwischen einem Ende des Betätigungskopfes und der dem Körper gegenüberliegenden Fläche angeordnet ist.

5. Vorrichtung nach einem dar Ansprüche 1 bis 3,
**dadurch gekennzeichnet**, **daß**
die Unterstützungsmittel eine Hilfskammer aufweisen, welche in einem Zwischenteil des Betätigungskopfes zwischen zwei gegenüberliegenden Flächen des Kopfes, welche unterschiedliche wirksame Querschnitte aufweisen, angeordnet ist.

6. Vorrichtung nach einem der Ansprüche 1 bis 3,
**dadurch gekennzeichnet**, **daß**
die Unterstützungsmittel eine Hilfskammer aufweisen, welche zwischen den Auslösungsmitteln und dem Betätigungskopf angeordnet ist.

7. Vorrichtung nach einem der Ansprüche 1 bis 3,
**dadurch gekennzeichnet**, **daß**
die Unterstützungsmittel eine Kammer (19; 112) aufweisen, welche zwischen dem Betätigungskopf (12; 106) und den Abflußmitteln (5; 108) angeordnet ist.

8. Vorrichtung nach einem der Ansprüche 2 bis 7,
**dadurch gekennzeichnet**, **daß**
die Mittel für den Abfluß des unter Druck stehenden Mediums einen Auslaßschiober für das Medium enthalten und daß die Unterstützungsmittel über Anschlußmittel an den Auslaß des Schiebers angeschlossen sind.

9. Vorrichtung nach Anspruch 7,
**dadurch gekennzeichnet**, **daß**
dar Betätigungskopf für die Abflußmittel ein Gestände für die Betätigung dieser Mittel aufweist.

10. Vorrichtung nach einem der Ansprüche 1 bis 7,
**dadurch gekennzeichnet**, **daß**
ein Teil (6a) des an dem Körper befestigten Behälters in einer Auslaskammer (1a, 101a) gegenüber den Durchschlagsmitteln verschraubt ist.

11. Vorrichtung nach den Ansprüchen 2 und 10,
**dadurch gekennzeichnet**, **daß**
die Mittel für den Anschluß der Unterstützungsmittel an den Auslaßpfad des unter Druck stehenden Mediums eine Leitung (111) enthalten, welche in dem Körper des Gehäuses zwischen der Auslaßkammer (101a) und der Hilfskammer (112) angeordnet ist.

12. Vorrichtung noch den Ansprüchen 2 und 4,
**dadurch gekennzeichnet**, **daß**
die Mittel für den Anschluß der Unterstützungsmittel an den Auslaßpfad des unter Druck stehenden Mediums eine Leitung enthalten, welche in den Mitteln für die Durchschlagung des Behälters, in dem Betätigungskopf und in den Auslösungsmitteln angeordnet ist.

13. Vorrichtung nach den Ansprüchen 2 und 6,
**dadurch gekennzeichnet**, **daß**
die Mittel für den Anschluß der Unterstützungsmittel an den Auslaßpfad des unter Druck stehenden Mediums eine Leitung enthalten, welche in den Durchschlagsmitteln und in dem Betätigungskopf angeordnet ist.

14. Vorrichtung nach den Ansprüchen 2 und 7,
**dadurch gekennzeichnet**, **daß**
die Mittel für den Anschluß der Unterstützungsmittel an den Auslaßpfad des unter Druck stehenden Mediums eine Leitung (16) aufweisen, welche in den Durchschlagsmitteln (13; 14) angeordnet ist.

15. Vorrichtung nach einem der Ansprüche 1 bis14,
**dadurch gekennzeichnet**, **daß**
die Durchschlagsmittel einen in dem Hohlraum des Körpers verschiebbaren Kolben (13; 107) aufweisen, der auf einer seiner Flächen eine Vorrichtung (14; 110) für den Durchschlag des Behälters aufweist.

16. Vorrichtung nach Anspruch 10,
**dadurch gekennzeichnet**, **daß**
die Auslaßkammer (1a; 101a) durch eine Wand (1b; 101b) von dem Hohlraum (2; 102) des Körpers abgetrennt ist, welche mit einer Öffnung (1c) für den Durchgang der Durchschlagsmittel versehen ist, und daß zwischen dieser Wand und diesen Mitteln Dichtmittel (1d) vorgesehen sind, um eine leckdichte Abtrennung zwischen der Kammer und dem Hohlraum zu gewährleisten.
